(19) **Europäisches Patentamt**
**European Patent Office**
**Office européen des brevets**

(11) **EP 2 006 268 A1**

(12) **EUROPEAN PATENT APPLICATION**
published in accordance with Art. 153(4) EPC

(43) Date of publication:
**24.12.2008 Bulletin 2008/52**

(51) Int Cl.:
***C04B 37/00*** *(2006.01)*

(21) Application number: **07740222.0**

(22) Date of filing: **29.03.2007**

(86) International application number:
**PCT/JP2007/056784**

(87) International publication number:
**WO 2007/114208 (11.10.2007 Gazette 2007/41)**

(84) Designated Contracting States:
**DE FR GB**

(30) Priority: **29.03.2006 JP 2006092290**

(71) Applicants:
• **Tokuyama Corporation**
**Shunan-shi, Yamaguchi-ken 745-8648 (JP)**
• **National Institute of Advanced Industrial Science and Technology**
**Tokyo 100-8921 (JP)**

(72) Inventors:
• **KANECHIKA, Yukihiro**
**Shunan-shi, Yamaguchi 745-8648 (JP)**
• **AZUMA, Masanobu**
**Shunan-shi, Yamaguchi 745-8648 (JP)**
• **YASUOKA, Masaki**
**Nagoya-shi, Aichi 463-8560 (JP)**
• **WATARI, Koji**
**Nagoya-shi, Aichi 463-8560 (JP)**

(74) Representative: **Kador & Partner**
**Corneliusstrasse 15**
**80469 München (DE)**

(54) **METHOD FOR JOINING ALUMINUM NITRIDE SINTERED BODY AND ALUMINUM NITRIDE JOINED BODY**

(57)    [Problem] It is an object to provide a joining method that enables to join aluminum nitride sinters together efficiently and tightly.

[Means for solution] A method of joining an aluminum nitride sinter includes placing an inclusion including a sintering aid between a surface to be joined of one aluminum nitride sinter and a surface to be joined of the other aluminum nitride sinter, and heating the inclusion by electromagnetic wave irradiation, thereby joining the aluminum nitride sinters together.

[Fig.7]

**EP 2 006 268 A1**

**Description**

TECHNICAL FIELD

The present invention relates to methods of joining aluminum nitride sinters and aluminum nitride joined articles. More specifically, the present invention relates to methods of joining aluminum nitride sinters and aluminum nitride joined articles using an electromagnetic wave such as a microwave.

BACKGROUND ART

As a method of joining ceramics, a joining method by locally heating around a part to be joined is known conventionally.

The heating method may be laser irradiation, microwave irradiation or the like.

However, ceramics are heated and fused from the outside thereof by laser irradiation. Consequently, an internal strength of a joined article is low and a shape of a joined surface is easily changed. In addition, the method has problems that only ceramics of oxides can be joined, that a heat crack is easily generated unfortunately, and that a residual of an air bubble in a joined part and a coarse of a crystal grain occur in some cases unfortunately.

As a method of joining ceramics by microwave irradiation, JP-2-62516-B (Patent document 1) describes a method of joining ceramics using a ceramic joining apparatus comprising a resonance cavity, a microwave generating means, a pressurization means for pressurizing surfaces to be joined of the ceramics put in the resonance cavity, and a temperature control means for controlling a temperature distribution in the ceramics.

In its Example 3, the temperature control means comprises a dielectric heating means for dielectric heating ceramics to be joined by microwave irradiation to the ceramics to be joined and a temperature difference formation means composed of an inclusion made of a material having a dielectric loss factor larger than that of the ceramics to be joined, the inclusion being in a plate shape or in a powder shape and put between surfaces to be joined. More specifically, in joining alumina materials having a purity of 99% (a dielectric loss factor at room temperature: $\varepsilon_r \tan \delta = 0.001$) together, the alumina materials are heated and joined together by placing an alumina thin plate (principal component: $Al_2O_3$, CaO: 1.5%, MgO: 0.8%, $SiO_2$: 7%, a dielectric loss factor at room temperature: $\varepsilon_r \tan \delta = 0.01$) having a dielectric loss factor larger than that of the alumina material on the surfaces to be joined and by dielectric heating the alumina thin plate on a priority basis.

Moreover, JP-8-73280-A (Patent document 2) describes a method of a solid-phase joining of a plurality of ceramics objects (aluminum nitride), that is, a method of manufacturing a joined article comprising the steps of having at least one of the surfaces to be joined of the ceramics objects to be joined coated with a solution of a joining assistant, and heat-treating each of the ceramics object in the state in which the surfaces to be joined are abutted to each other (Claim 6, Examples and the like). Patent document 2 describes that an aqueous solution or an ethyl alcohol solution of an yttrium compound is preferable as the solution of a joining assistant when the ceramics object is made of aluminum nitride ([0009], [0021], and others).

Patent document 2 also describes that a joining assistant is required to be dissolved and the both objects could not be satisfactorily joined together when a fluid dispersion or a slurry containing grains of the joining assistant was used ([0012]) and that examples of a heating method include a heat treatment at an ordinary pressure, hot pressing, a plasma activation sintering, and a local heating method using laser ([0023]). Moreover, Patent document 2 describes that ceramics objects could not be joined to each other when a plurality of ceramics objects (aluminum nitride) were heat-treated while the joining assistant was placed between the ceramics objects in the comparison example.

Patent document 1: JP-2-62516-B
Patent document 2: JP-8-73280-A

DISCLOSURE OF THE INVENTION

PROBLEMS TO BE SOLVED BY THE INVENTION

However, it is extremely difficult to join aluminum nitride sinters having an extremely small dielectric loss factor at an around room temperature to each other by the method described in Patent document 1.

Moreover, it is found in the method of manufacturing a joined article described in Patent document 2 that not only a part to be joined but also the whole object to be joined must be heated and that there is still room for improvement to join aluminum nitride sinters together efficiently.

The present invention has been made in consideration of such conditions, and an object of the present invention is to provide a joining method that enables to join aluminum nitride sinters together efficiently and tightly.

MEANS FOR SOLVING THE PROBLEMS

A method of joining aluminum nitride sinters of the present invention comprises placing an inclusion comprising a sintering aid between a surface to be joined of one aluminum nitride sinter and a surface to be joined of the other aluminum nitride sinter, and heating the inclusion by electromagnetic wave irradiation, thereby joining the aluminum nitride sinters together.

The sintering aid is preferably at least one kind of a compound selected from the group composed of an oxide, a nitride, a chloride, a nitrate, a carbonate, and a fluoride, said compound containing at least one element selected from the group composed of yttrium (Y), calcium (Ca), cerium (Ce), holmium (Ho), ytterbium (Yb), gadolinium (Gd), neodymium (Nd), samarium (Sm), dysprosium (Dy), and strontium (Sr).

The inclusion may be a paste comprising the sintering aid, an aluminum nitride green object comprising the sintering aid, or an aluminum nitride degreased object comprising the sintering aid. Among them, the paste is preferable, and the paste further comprising aluminum nitride powder is more preferable.

In the method of joining aluminum nitride sinters, it is preferable that the inclusion being the paste and further comprising carbon is used and the heating is carried out in a reducing atmosphere.

In the method of joining aluminum nitride sinters, it is preferable that the sintering aid contained in the inclusion is a sintering aid processed by a ball mill.

In the method of joining aluminum nitride sinters, it is also preferable that the heating is carried out in an inert gas atmosphere.

A frequency of the electromagnetic wave is preferably in the range of 0.2 to 30 GHz.

An aluminum nitride joined article of the present invention is formed by joining by the method as described above.

EFFECT OF THE INVENTION

According to the method of joining aluminum nitride sinters of the present invention, aluminum nitride sinters can be joined together efficiently and tightly.

BRIEF DESCRIPTION OF THE DRAWINGS

Fig. 1 is a view showing examples of shapes of surfaces to be joined of the aluminum nitride sinters.
Fig. 2 is a view showing examples of embodiments of joining aluminum nitride sinters.
Fig. 3 is a view showing embodiments of the present invention.
Fig. 4 is a view showing an example of an embodiment using together a paste 2 containing a sintering aid and a paste 3 containing no sintering aid.
Fig. 5 is a view showing an embodiment of a means for pressurizing surfaces to be joined of ceramics.
Fig. 6 is a schematic view showing an arrangement and a shape of a test piece in a three point flexural test.
Fig. 7 is a schematic view showing an example of arrangements of an aluminum nitride sinter and the like in the Examples.

EXPLANATIONS OF LETTERS OR NUMERALS

1: Aluminum nitride sinter
2: Paste (containing a sintering aid)
3: Paste (containing no sintering aid)
4: Jig for a aluminum nitride sinter
5: Microwave transmitter
6: Joining apparatus
11: Surfaces to be joined
12: Joining part

BEST MODE OF CARRYING OUT THE INVENTION

The method of joining aluminum nitride sinters and the aluminum nitride joined article of the present invention will be described below in detail.

[Method of joining aluminum nitride sinters]

The method of joining aluminum nitride sinters of the present invention comprises placing an inclusion comprising a sintering aid between a surface to be joined of one aluminum nitride sinter and a surface to be joined of the other aluminum nitride sinter, and heating the inclusion by electromagnetic wave irradiation, thereby joining the aluminum nitride sinters together.

The aluminum nitride sinter to be joined contains a rare earth element and/or an alkali earth metal element as an impurity in the range of 0.01 to 6 % by mass in general, preferably in the range of 0.02 to 4 % by mass. The impurity is generally derived from a rare earth element and/or an alkali earth metal element in a sintering aid that is used in manufacturing the aluminum nitride sinter. As the sintering aid, a sintering aid contained in a paste as described later that is used in the present invention is used. When a concentration of the rare earth element and/or the alkali earth metal element in the aluminum nitride sinter is in the above range, the strength of the aluminum nitride sinter itself tends to be decreased.

A shape of the aluminum nitride sinter to be joined is not restricted in particular. For instance, the shape of the aluminum nitride sinter to be joined may be a prism, a circular cylinder, or a block. To obtain an aluminum nitride joined article having more reliable joining strength, it is preferable that the surfaces to be joined of the aluminum nitride sinter are made flat by an abrasive finishing or the like and a gap is prevented from being generated when the aluminum nitride sinters are abutted to each other.

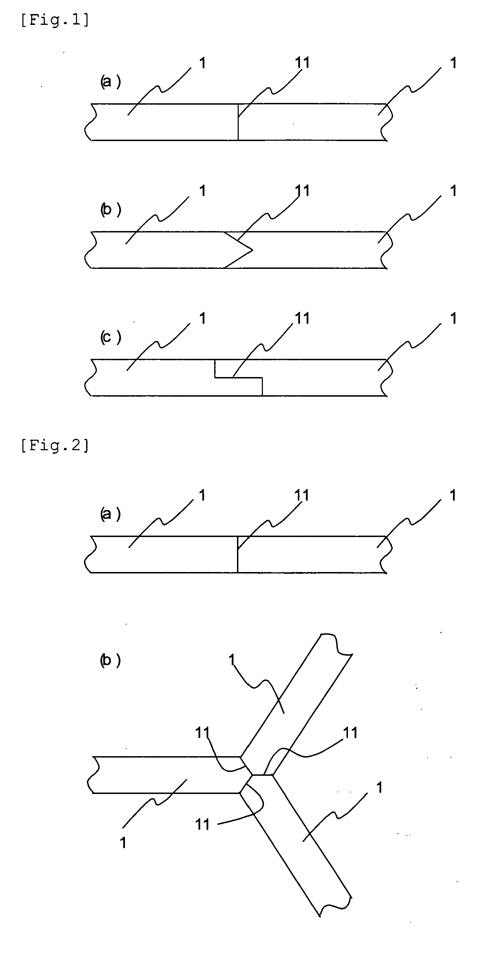

The shape of the surface to be joined of the aluminum nitride sinter may be a plan shape as shown in Fig. 1(a), a V-shape as shown in Fig. 1(b), and a step-shape as shown in Fig. 1(c).

A number of the aluminum nitride sinters to be joined is not restricted in particular. For instance, two aluminum nitride sinters may be joined as shown in Fig. 2 (a) , three aluminum nitride sinters may be joined as shown in Fig. 2(b), and more aluminum nitride sinters may be joined.

The inclusion containing a sintering aid is placed between a surface to be joined of one aluminum nitride sinter and a surface to be joined of the other aluminum nitride sinter in such a manner that the inclusion comes into contact with the surfaces to be joined.

The sintering aid is preferably at least one kind of a compound containing at least one element selected from the group composed of yttrium (Y), calcium (Ca), cerium (Ce), holmium (Ho), ytterbium (Yb), gadolinium (Gd), neodymium (Nd), samarium (Sm), dysprosium (Dy), and strontium (Sr) . The compound is preferably selected from the group composed of an oxide, a nitride, a chloride, a nitrate, a carbonate, and a fluoride. More specifically, $Y_2O_3$, CaO, and $Yb_2O$ are preferable, among them, $Y_2O_3$ and CaO are more preferable.

The inclusion placed between a surface to be joined of one aluminum nitride sinter and a surface to be joined of the other aluminum nitride sinter may be a paste containing the sintering aid, an aluminum nitride green object containing the sintering aid, an aluminum nitride degreased object containing the sintering aid or the like. Among them, the paste is preferable since it is easily coatable and can be applied to a surface to be joined in a complicated shape. It is preferable that the sintering aid is treated with a ball mill before the sintering aid is placed between a surface to be joined of one aluminum nitride sinter and a surface to be joined of the other aluminum nitride sinter.

It is preferable that the treatment with a ball mill is carried out when the sintering aid is in a paste singly or together with aluminum nitride powder and the like. A treatment time with a ball mill is preferably in the range of 1 to 50 hours. A material of a container and a ball of the ball mill is preferably alumina.

As a heating method of the inclusion prepared using a ball mill, irradiation of an electromagnetic wave (a microwave or a millimeter wave) having a frequency in the range of 0.2 to 30 GHz is preferable since an effective heating can be carried out. It is not determined, however, the reason why an effective heating can be carried out by the heating method is thought to be as follows. That is, it is thought that the sintering aid particles treated using a ball mill are chipped in such a manner as that crystal defects are generated and, as a result, the sintering aid particles are easily vibrated when irradiated with a microwave or a millimeter and, thus, a temperature of the sintering aid particles and a temperature of the inclusion containing the sintering aid particles is easily increased (the sintering aid particles are easily dielectrically heated).

The following describes the case in which the inclusion is the paste.

It is preferable that the paste further contains aluminum nitride powder. When the paste contains aluminum nitride powder, the composition of an aluminum nitride sinter and the composition of a part formed by sintering the paste (hereafter referred to as a "paste sintered part") are comparatively close to each other. Consequently, the strength of a joined article obtained by joining the aluminum nitride sinters together becomes larger advantageously.

The paste contains the sintering aid preferably in the range of 7 % by mass or less, more preferably in the range of 1.2 to 5.0 % by mass in terms of the rare earth element and/or the alkali earth metal element in the sintering aid (the sum of the aluminum nitride powder and the sintering aid is 100 % by mass). When a concentration of the sintering aid in the paste is in the above range, a sintering temperature of the aluminum nitride powder is sufficiently decreased, and the sintering aid is sufficiently volatilized or is sufficiently diffused in an aluminum nitride joined article. Consequently, the sintering aid does not remain locally in the paste sintered part, and a concentration of the remaining sintering aid is almost constant between the sintered part and the aluminum nitride sinter. Therefore, the obtained aluminum nitride joined article has a flexural strength equivalent to that of the base material (the aluminum nitride sinter before joining) at the joining part (the sintered part).

It is preferable that a particle size of the aluminum nitride powder and the sintering aid is in the range of 0.1 to 3 $\mu$m. When a particle size, in particular a particle size of the aluminum nitride powder, is in the range of 0.1 to 3 $\mu$m, a ratio of a volume of the aluminum nitride in a volume of the entire paste is large, thereby enlarging a density of a part formed by sintering the aluminum nitride powder in the paste (hereafter may also be simply referred to as a "sintered part").

The paste may contain carbon powder. Containing the carbon powder is preferable from the viewpoint that volatilizing of the sintering aid can be accelerated during sintering described later.

It is preferable that the aluminum nitride powder and the carbon powder are contained in the paste at a mass ratio as follows: aluminum nitride powder : carbon powder = 100 : 0.5 to 30, preferably 100 : 1 to 10. When a ratio of the carbon powder is in the above range, volatilizing of the sintering aid can be accelerated during sintering.

A particle size of the carbon powder is preferably in the range of 0.1 to 10 $\mu$m. In the case in which the particle size of the carbon powder is in the range of 0.1 to 10 $\mu$m, a distribution of carbon in the paste can be uniformed.

A solvent contained in the paste may be terpineol (boiling point: 212°C).

As the solvent, a solvent having a high boiling point such as terpineol, for instance a solvent having a high boiling point in the range of about 100 to 300°C is preferable. In the case in which the solvent having a high boiling point is used, when the paste is irradiated with a microwave or a millimeter wave, the solvent can be prevented from being volatilized before sufficient self-heating of the sintering aid in the paste. Consequently, the dielectric heating of the sintering aid can be easily carried out.

The content of the solvent in the paste may be in the range of 10 to 50 % by mass at room temperature (25°C).

The above paste may be prepared using the publicly known mixing and stirring apparatuses such as a high speed disperse, a sand grind mill, a basket mill, a ball mill, a three role mill, a loss mixer, a planetary mixer, and a Shinagawa universal mixer, and is preferably prepared using a ball mill as described before.

Even an embodiment in which no AlN powder and no carbon powder are contained in the paste, the effect of the present invention is sufficiently exerted.

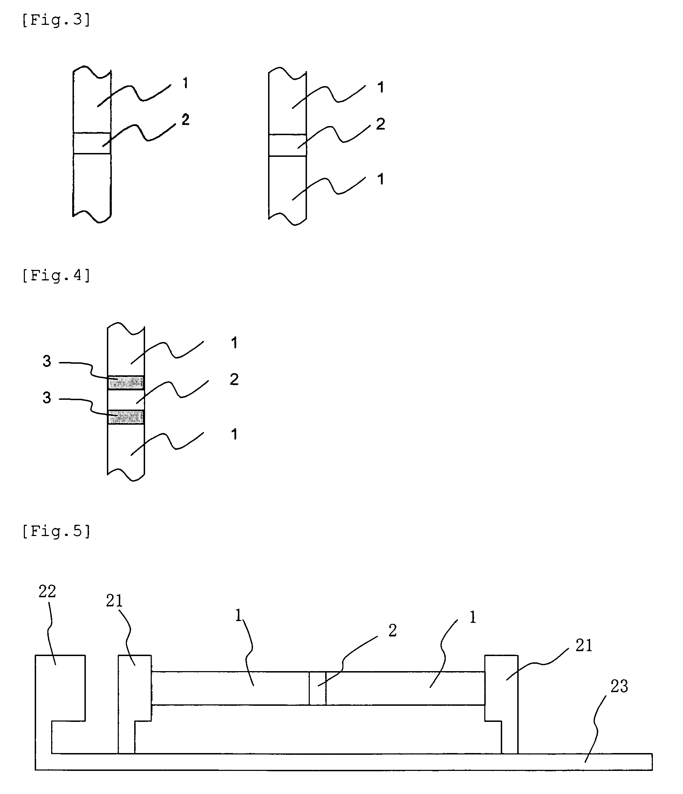

As shown in Fig. 3, in the method of joining an aluminum nitride sinter of the present invention, the inclusion such as a paste placed between surfaces to be joined of aluminum nitride sinters is heated by electromagnetic wave irradiation to join the aluminum nitride sinters together.

A thickness of the paste (a paste layer) placed between surfaces to be joined of aluminum nitride sinters is preferably in the range of 0.01 to 0.5 mm at room temperature, more preferably in the range of 0.1 to 0.3 mm. When the thickness of the paste is in the above range, the sintering of the paste is progressed and the adhesion of the paste sintered part and the aluminum nitride sinter is improved.

The paste layer may be formed by coating the surface to be joined of one aluminum nitride sinter with the paste. The paste layer may also be formed by placing the aluminum nitride sinters in such a manner that a gap is formed between the aluminum nitride sinters facing to each other and injecting the paste in the gap.

As shown in Fig. 4, separately from the above paste, a paste containing aluminum nitride powder and no sintering aid may be prepared, and then the paste (the paste 3 containing no sintering aid) may be placed between the paste layer (a paste layer 2 containing the sintering aid) and the aluminum nitride sinter 1. In doing so, the adhesion of a joining layer and the aluminum nitride sinter can be further improved. The paste containing no sintering aid can be prepared by the same compounding and method as those of the paste containing the sintering aid except for using no sintering aid.

An energy P absorbed in the sample material by a dielectric heating using a microwave is represented by the expression:

$$P = 2\pi f \varepsilon_0 \varepsilon_r \tan\delta E^2$$

wherein $\varepsilon_0$ is a dielectric constant of vacuum, $\varepsilon_r$ is a relative dielectric constant, $\tan\delta$ is a dielectric loss tangent, f is a frequency, and E is an electric field strength of the electromagnetic wave such as a microwave.
When the dielectric loss factor $\varepsilon''$ (= $\varepsilon_r \tan\delta$) is larger, the energy absorption efficiency of the sample material is higher.

The dielectric loss factor $\varepsilon''$ (= $\varepsilon_r \tan\delta$) changes according to a temperature, a frequency or the like. The dielectric loss factor $\varepsilon''$ (= $\varepsilon_r \tan\delta$) of ceramics is small at around room temperature in general, but rises rapidly as a temperature rises.

The dielectric loss factor $\varepsilon''$ (= $\varepsilon_r \tan\delta$) of aluminum nitride at around room temperature is extremely small as compared with other ceramics. Consequently, it is extremely difficult to heat aluminum nitride by normal microwave irradiation from room temperature to a temperature enabling the joining.

On the other hand, when the paste containing aluminum nitride powder and the sintering aid is irradiated with a microwave, self-heating of the sintering aid in the paste is induced by electromagnetic wave irradiation and, as the result, a temperature of the aluminum nitride powder in the paste is increased to a temperature in which a heating by electromagnetic wave irradiation becomes easy, that is, in which self-heating by electromagnetic wave irradiation becomes easy, and a sintering temperature is decreased. Consequently, the aluminum nitride powder can be sintered and the aluminum nitride sinters can be joined together. At the same time, the sintering aid is volatilized and/or diffused in the aluminum nitride sinters to be joined, thereby reducing the amount of the sintering aid remaining in the sintered part. Therefore, the aluminum nitride sinters are joined tightly. The amount of the sintering aid remaining in the sintered part is, in terms of the metal element in the sintering aid, for instance in the range of 0.01 to 6 % by mass in the case in which the metal element is yttrium, and preferably in the range of 0.02 to 4 % by mass.

To volatilize the sintering aid, it is preferable to carry out the heating in a reduction atmosphere such as an atmosphere of carbon and an atmosphere of carbon monoxide. In this case, it is preferable to use the paste containing carbon powder as the paste as described above.

The fact that the sintering aid has been volatilized can be confirmed by, for instance, measuring the content of the metal element in the sintering aid in the paste sintered part (a part formed by sintering aluminum nitride powder in the paste) by using an energy dispersive X-ray spectrometer. The content of the metal element in the paste sintered part is for instance in the range of 1 to 75% of the pre-sintered, preferably in the range of 1 to 55%.

To diffuse the sintering aid in the aluminum nitride sinter, it is preferable that the heating is carried out in an inert gas atmosphere such as an atmosphere of nitrogen and an atmosphere of rare gas. By carrying out the heating in the inert gas atmosphere, the content of the metal element in the sintering aid in the paste sintered part of the paste can be almost the same as the content of the metal element in the area around the joined surfaces of the aluminum nitride sinters.

The fact that the the sintering aid has been diffused in the aluminum nitride sinter can be confirmed by sampling a part of an aluminum nitride joined article that was formed while changing a distance from the joining part and by measuring that by using an energy dispersive X-ray spectrometer.

In the present invention, only the inclusion placed between the aluminum nitride sinters is locally heated by electromagnetic wave irradiation. Consequently, it is not required to heat the entire of the aluminum nitride sinters.

The case in which the inclusion is a paste was described above. However, not only the paste but also the aluminum nitride green object containing the sintering aid and the aluminum nitride degreased object containing the sintering aid can be used as the inclusion.

In the case in which the inclusion is the aluminum nitride green object containing the sintering aid, a thickness of the green object placed between the surfaces to be joined of the aluminum nitride sinters is preferably in the range of 0.1 to 3 mm, more preferably in the range of 0.3 to 2 mm. When the thickness of the green object is in the above range, the sintering of the green object is progressed and the adhesion of a green object sintered part and the aluminum nitride sinters is improved.

In the case in which the inclusion is the aluminum nitride degreased object containing the sintering aid, a thickness of the degreased object placed between the surfaces to be joined of the aluminum nitride sinters is preferably in the range of 0.1 to 3 mm, more preferably in the range of 0. 3 to 2 mm. When the thickness of the degreased object is in the above range, the sintering of the degreased object is progressed and the adhesion of a degreased object sintered part and the aluminum nitride sinters is improved.

It is also possible to join the aluminum nitride and the green object or the degreased object while the paste is placed between them.

In the case in which the green object or the degreased object is used, the conditions other than a thickness thereof, for instance a kind of the sintering aid, a usage of carbon powder, and an atmosphere in heating, are the same as those in the case in which the paste is used.

The electromagnetic wave to be used for heating is preferably an electromagnetic wave having a frequency in the range of 0.2 to 30 GHz (a microwave or a millimeter wave). For instance, an electromagnetic wave having a frequency of 2.45 GHz may be used.

To have the aluminum nitride sinter efficiently absorb an energy of the electromagnetic wave, it is preferable that electromagnetic wave irradiation is carried out while at least the area around the surfaces to be joined of the aluminum nitride sinters is housed in a container that does not leak the electromagnetic wave to the outside thereof.

For electromagnetic wave irradiation, a publicly known apparatus such as an apparatus disclosed in Patent document 1 may be used.

In heating, it is preferable that the surfaces to be joined of the aluminum nitride sinters are pressurized by pressing the aluminum nitride sinters to each other in order to join the aluminum nitride sinters more tightly. As a means for pressurizing the surfaces to be joined, a publicly known pressurizing means such as the pressurizing means as shown in Fig. 5 (i.e., Fig. 17 of Patent document 1) comprising a symmetric concentric chucks 21 for holding an end opposite to the surface to be joined of the aluminum nitride sinter 1 to be joined, an air cylinder 22 that can pressurize the chucks, and a table for moving 23 that can move the chucks while the chucks are pressurized may be used.

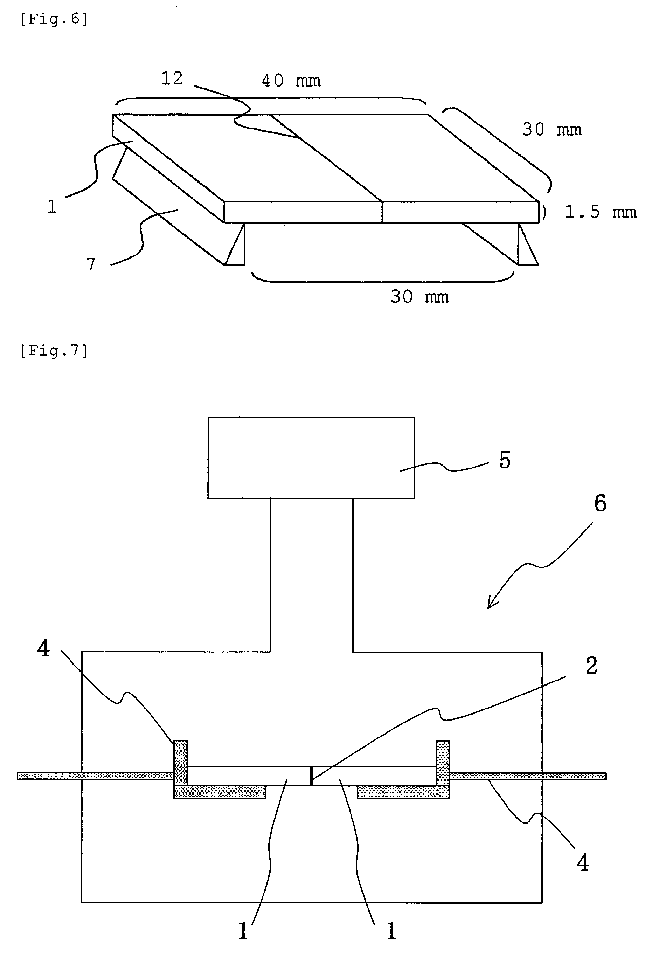

The strength of the aluminum nitride joined article formed by the joining method of the present invention is satisfactory. In the case in which the inclusion is the paste containing aluminum nitride powder and the sintering aid, the strength is satisfactory in particular. For instance, the flexural strength in a three point flexural test at room temperature according to the flexural test method of fine ceramics at room temperature (JIS C2141) with a direct load applied to the joining part is 70% or higher and preferably 80% or higher of that of the base material, that is, the aluminum nitride sinter before joining. As shown in Fig. 6, the value is a value measured according to the following procedure: setting a distance between supporting points to 30 mm, preparing a test piece having a length of 40 mm, a width of 30 mm, and a thickness of 1.5 mm, and provided with a joining part 12 at the center in a length direction, placing the test piece in such a manner that the joining part 12 is located at the center between the supporting points, and measuring the value with applying a load from the upper side of the joining part.

In the aluminum nitride joined article of the present invention, a deterioration of the aluminum nitride sinter at the joined surface is low.

EXAMPLES

The present invention will be described in greater detail by examples below, but it should be construed that the invention is in no way limited to such examples.

<Apparatus and measuring method>

For preparation of a paste, a ball mill (model number: P-5, manufacturer: FRITSCHE Corporation, alumina pot and ball) was used.

For irradiation with a microwave, a microwave sintering furnace (model number: MW-Master) (hereafter also referred to as a "joining apparatus") manufactured by MINO CERAMIC CO., LTD. was used.

The measurement of a temperature was carried out by using an infrared radiometer thermometer attached to the joining apparatus.

<Flexural test>

A three point flexural test was carried out according to the flexural test method of fine ceramics at room temperature (JIS C2141 specification) . The distance between supporting points was set to 30 mm. In evaluating the aluminum nitride after the joining, as shown in Fig. 6, the aluminum nitride joined article was formed to be a sample material piece having a total length of 40 mm and a thickness of 1.5 mm, the test piece was placed in such a manner that the joining part is located at the center between the supporting points, and a load was applied to the joining part.

<Y concentration>

The concentration of Y in the aluminum nitride sinter and the concentration of Y in the joining part (the paste sintered part) were measured by using an energy dispersive X-ray spectrometer.

[Example 1]

Aluminum nitride powder (average particle size of 1.2 $\mu$m, high purity aluminum nitride powder H grade manufactured by Tokuyama Corporation) of 100 g, $Y_2O_3$ powder (average particle size of 1 $\mu$m, product name and manufacturer: yttrium oxide manufactured by Wako Pure Chemical Industries, Ltd.) of 5 g, and terpineol of 15 g as a solvent were mixed by using a ball mill at a number of revolution of 200 rpm for 5 hours to prepare a paste having an Y concentration in a solid content of 37000 ppm.

The entire surface 11 to be joined (a side surface of 30 mm x 2 mm) of an aluminum nitride sinter (30 mm x 30 mm, a thickness of 2 mm, and an Y concentration of 34000 ppm) was coated with the paste in such a manner that the paste has a thickness of approximately 0.3 mm and, then, another aluminum nitride sinter was placed on the coated surface. They were placed in a chassis of a joining apparatus 6 as shown in Fig. 7. The aluminum nitride sinters 1 were pressed to each other using a jig 4 via the paste 2 to keep applying a pressure of 1 kgf/cm$^2$ (0.098 MPa) to the surfaces 11 to be joined.

The paste 2 was irradiated with a microwave (frequency: 2.45 GHz) from a microwave transmitter 5 and was thereby heated from room temperature in a nitrogen atmosphere. The output of the microwave was increased to 3000 W at a constant rate in 120 minutes. After 120 minutes from the start of the electromagnetic wave application, the temperature at the paste-coated region reached 1700°C. The temperature was maintained for 30 minutes and the application of the electromagnetic wave was terminated. The aluminum nitride sinters were joined by the sintering of the aluminum nitride powder in the paste. The aluminum nitride joined article obtained was allowed to cool in the joining apparatus for 60 minutes and was taken out from the apparatus.

A three point flexural test of the joined aluminum nitride sinters (aluminum nitride joined article) was carried out. The strength of the joined aluminum nitride sinters was the same as that of the aluminum nitride sinter before the joining (350 MPa). The Y concentration in the joining part was 33000 ppm and was almost the same as that in the aluminum nitride sinter.

[Example 2]

Aluminum nitride powder (average particle size of 1.2 $\mu$m, high purity aluminum nitride powder H grade manufactured by Tokuyama Corporation) of 100 g, $Y_2O_3$ powder (average particle size of 1 $\mu$m, product name and manufacturer: yttrium oxide manufactured by Wako Pure Chemical Industries, Ltd.) of 5 g, carbon powder (average particle size of 0.5 $\mu$m, product name: carbon powder manufactured by Wako Pure Chemical Industries, Ltd.) of 1 g, and terpineol of 15 g as a solvent were mixed by using a ball mill at a number of revolution of 200 rpm for 5 hours to prepare a paste having an Y concentration in a solid content of 37000 ppm.

The aluminum nitride sinters were joined together in the same manner as in Example 1 except that the atmosphere of nitrogen was replaced by a CO gas atmosphere (an atmosphere of carbon monoxide). After 120 minutes from the start of the electromagnetic wave application, the temperature at the paste-coated region reached 1700°C same as Example 1.

A three point flexural test of the joined aluminum nitride sinters (aluminum nitride joined article) was carried out. The strength of the joined aluminum nitride sinters was the same as that of the aluminum nitride sinter before the joining (350 MPa) .

The Y concentration in the joining part was 15000 ppm. It was confirmed that the Y concentration was decreased by 50% or more as compared with the paste before the sintering.

[Example 3]

A paste having an Y concentration in a solid content of 182000 ppm was prepared in the same manner as in Example 1 except that $Y_2O_3$ powder of 5 g was replaced by $Y_2O_3$ powder of 30 g. Aluminum nitride sinters were joined together in the same manner as in Example 1 except that this paste was used. After 120 minutes from the start of the electromagnetic wave application, the temperature at the paste-coated region reached 1700°C same as Example 1.

A three point flexural test of the joined aluminum nitride sinters (aluminum nitride joined article) was carried out. The flexural strength of the joined aluminum nitride sinter was 200 MPa, and was smaller than that of the aluminum nitride sinter before the joining (350 MPa).

The Y concentration in the region around the joining part of the aluminum nitride sinter was 34000 ppm.

The Y concentration in the joining part was 180000 ppm.

**Claims**

1. A method of joining aluminum nitride sinters, comprising:

   placing an inclusion containing a sintering aid between a surface to be joined of one aluminum nitride sinter and a surface to be joined of the other aluminum nitride sinter: and
   heating the inclusion by electromagnetic wave irradiation, thereby joining the aluminum nitride sinters together.

2. The method of joining aluminum nitride sinters according to claim 1, wherein the sintering aid is at least one kind of a compound selected from the group composed of an oxide, a nitride, a chloride, a nitrate, a carbonate, and a fluoride, said compound containing at least one element selected from the group composed of yttrium (Y), calcium (Ca), cerium (Ce), holmium (Ho), ytterbium (Yb), gadolinium (Gd), neodymium (Nd), samarium (Sm), dysprosium (Dy), and strontium (Sr).

3. The method of joining aluminum nitride sinters according to claim 1 or 2, wherein the inclusion is a paste comprising the sintering aid.

4. The method of joining aluminum nitride sinters according to claim 3, wherein the paste further comprises aluminum nitride powder.

5. The method of joining aluminum nitride sinters according to claim 1 or 2, wherein the inclusion is an aluminum nitride green object comprising the sintering aid.

6. The method of joining aluminum nitride sinters according to claim 1 or 2, wherein the inclusion is an aluminum nitride degreased object comprising the sintering aid.

7. The method of joining aluminum nitride sinters according to any one of claims 1 to 6, wherein the inclusion further comprising carbon is used and the heating is carried out in a reducing atmosphere.

8. The method of joining aluminum nitride sinters according to any one of claims 1 to 7, wherein the sintering aid contained in the inclusion is a sintering aid processed by a ball mill.

9. The method of joining aluminum nitride sinters according to any one of claims 1 to 8, wherein the heating is carried out in an inert gas atmosphere.

10. The method of joining aluminum nitride sinters according to any one of claims 1 to 9, wherein a frequency of the electromagnetic wave is in the range of 0.2 to 30 GHz.

11. An aluminum nitride joined article formed by joining by the method of any one of claims 1 to 10.

[Fig.1]

(a)

(b)

(c)

[Fig.2]

(a)

(b)

[Fig.3]

[Fig.4]

[Fig.5]

[Fig.6]

[Fig.7]

## INTERNATIONAL SEARCH REPORT

| | International application No. |
|---|---|
| | PCT/JP2007/056784 |

A. CLASSIFICATION OF SUBJECT MATTER
*C04B37/00*(2006.01)i

According to International Patent Classification (IPC) or to both national classification and IPC

B. FIELDS SEARCHED

Minimum documentation searched (classification system followed by classification symbols)
C04B37/00

Documentation searched other than minimum documentation to the extent that such documents are included in the fields searched

| Jitsuyo Shinan Koho | 1922-1996 | Jitsuyo Shinan Toroku Koho | 1996-2007 |
|---|---|---|---|
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 63-239164 A  (Director General, Agency of Industrial Science and Technology),<br>05 October, 1988 (05.10.88),<br>Claims<br>(Family: none) | 1-6,9-11<br>7,8 |
| Y<br>A | JP 2001-270779 A  (Kyocera Corp.),<br>02 October, 2001 (02.10.01),<br>Par. Nos. [0023], [0032]<br>(Family: none) | 1-6,9-11<br>7,8 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 June, 2007 (15.06.07) | 26 June, 2007 (26.06.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2062516 B

- JP 8073280 A